# EUROPEAN PATENT APPLICATION

(11) **EP 1 172 593 A1**
(43) Date of publication of application: **16.01.2002**
(21) Application number: 01117020.6
(22) Date of filing: 12.07.2001
(51) Int. Cl.: F16L 11/12

(54) **Method for manufacturing fuel transporting hose**

(30) Priority: 13.07.2000 JP 2000213302
(71) Applicant: Tokai Rubber Industries, Ltd., Komaki-shi, Aichi-ken, 485-8550 (JP)
(72) Inventor: Nishiyama, Takahiro, Kasugai-shi, Aichi-ken, 486-0903 (JP); Kato, Kato, Nagoya-shi, Aichi-ken, 464-0027 (JP)
(74) Representative: Frankland, Nigel Howard

(57) **Abstract**

A method for manufacturing a fuel transporting hose (1) which is low in manufacturing costs and is superior in characteristics, including insertability, sealability and pull-out resistance. The method includes the steps of extrusion-molding an unvulcanized hose having fluoro rubber as an inner layer (2) without using a mandrel, vulcanizing the unvulcanized hose so as to form a fuel transporting hose having a fluoro rubber inner layer (2), and forming a fluorine-modified silicone lubricating layer (6) on the inner peripheral surface of the fluoro rubber inner layer (2).

## Description

### BACKGROUND OF THE INVENTION

### Field of the Invention

The present invention relates to a method for manufacturing a fuel transporting hose, and specifically, relates to a method for manufacturing a fuel transporting hose for vehicles which is used for relatively low pressure parts such as return lines and vapor lines.

### Description of the Art

Currently, hoses having an inner layer of fluoro rubber are widely used as fuel transporting hoses for vehicles using gasoline, evaporated gasoline or the like because of their sour gas resistance, gasoline impermeability and so forth. when the hoses are required to have pressure resistance at a certain level or higher, they have a reinforcing layer therein and the pressure resistance is provided by the number of cords, braiding angle, strength (size) and the like of the reinforcing threads of the layer. Such fuel transporting hoses are used at feed lines under high pressure (higher than 0.2 MPa), return lines under relatively low pressure, vapor lines under low pressure, and vapor lines, filler lines (lines connecting a gas filling port and a gasoline tank) and the like under nearly no pressure or only negative pressure.

The hoses that are used at relatively low pressure (0.2 MPa or less) such as return lines and vapor lines, are directly mounted on mating pipes, and are fastened by the tension of the hoses and clamps mounted thereon. Thus, the hoses should have good insertability into pipes during the assembly process thereof from a viewpoint of workability, while, at the same time, should also have sealability to prevent fuel leakage and pull-out resistance during their use. Thus, the hoses need to have contradictory properties.

Generally, manufacturing costs are minimized when a hose is manufactured all at once in a long length, such as in case of manufacturing straight hoses having a fluoro rubber inner layer and reinforcing threads. Therefore, the hoses are manufacturing by the following methods 1 and 2.

Method 1: A resinous mandrel coated with a release agent thereon is prepared, and unvulcanized fluoro rubber and an intermediate layer material are co-extrusion molded on the surface of the mandrel, thus forming a fluoro rubber inner layer and an intermediate layer. Then, reinforcing threads are braided continuously or in steps on the outer peripheral surface of the intermediate layer to form a reinforcing layer, and an outer layer rubber material is then extruded continuously or in steps to form an outer layer. Furthermore, a coating material (resin or lead) is coated continuously or in steps, and the coated hose is wound around a drum and then vulcanized. The coating material (resin or lead) is cut and removed thereafter, and the mandrel is pulled out by water pressure. The hose product is then cut into appropriate lengths.

Method 2: A resinous mandrel coated with a release agent thereon is prepared, and unvulcanized fluoro rubber and an intermediate layer material are co-extrusion molded on the surface of the mandrel, thus forming a fluoro rubber inner layer and an intermediate layer. Then, reinforcing threads are braided continuously or in steps on the outer peripheral surface of the intermediate layer to form a reinforcing layer, and an outer layer rubber material is then extruded continuously or in steps to form an outer layer. The hose product is cut into appropriate lengths (short lengths), and cut lengths of hose are arranged on a plate for vulcanization. Then, the mandrel is pulled out, and the ends of the hoses are cut off.

Fluoro rubber (FKM) generally has a lower pipe sliding property and less insertability than other rubber materials. However, since a release agent is coated on the surface of a mandrel as in the above-noted methods, the release agent remains on the inner peripheral surface of the fluoro rubber inner layer. The release agent functions as an insertion agent for inserting a hose onto a pipe, providing excellent insertability for the hose. Moreover, since the release agent and the fluoro rubber are in contact with each other in the unvulcanized state, the agent sticks to the fluoro rubber well even after vulcanization, thus preventing the sealability property from declining. Thus, even if hoses are used as relatively low pressure parts, they are manufactured with a resinous mandrel for the inside thereof and a coating material (resin or lead) for the outside thereof in consideration of hose insertability.

However, the method 1 mentioned above requires the step of pulling out the mandrel by water pressure and the like, and has problems such as the high number of manufacturing steps, the complexity of the manufacturing equipment and high costs. Moreover, pressure resistance has to be higher than required resistance, so as to endure the water pressure used in pulling out the mandrel. Accordingly, the pressure resistance has to be provided by the number of cords, braiding angle, strength (size) and so forth of reinforcing threads, and becomes excessive relative to necessary resistance, thus increasing costs. On the other hand, a mandrel is pulled out after the hose is cut into certain lengths (short lengths) in the method 2 mentioned above. Thus, it is unnecessary to pull out the mandrel by water pressure, and the step of pulling out the mandrel is simpler than that in method 1. However, the hose is cut into short lengths, and thereby the number of hoses increases. Accordingly, as in the method 1 mentioned above, this method 2 has problems such as the high number of manufacturing steps and high costs. Additionally, as the hose is cut into short lengths, the mandrel is also cut into short lengths and therefore the mandrel cannot be reused, thus increasing costs.

### SUMMARY OF THE INVENTION

Accordingly, it is an object of the present invention to provide a method for manufacturing a fuel transporting hose which can be manufactured at low cost and is excellent in characteristics, including insertability, sealability and pull-out resistance.

In order to achieve the above-noted object, the method of the present invention includes the steps of:
extrusion molding an unvulcanized hose having fluoro rubber as an inner layer without using a mandrel; vulcanizing the unvulcanized hose to form a fuel transporting hose having a fluoro rubber inner layer; and forming a fluorine-modified silicone lubricating layer at the inner peripheral surface of the fluoro rubber inner layer.

In other words, the present inventors, researched in depth a method for manufacturing a fuel transporting hose that can be manufactured at low cost and has excellent insertability, sealability and pull-out resistance. The present inventors also examined the use of a mandrel in manufacturing fuel transporting hoses. Insertability has been conventionally improved by coating a release agent on the surface of a mandrel. Without a mandrel, a fluoro rubber has a lower pipe sliding property and less insertability than other rubber materials, so that there has been a need to improve the insertability thereof. Thus, the present inventors considered that insertability might improve if a lubricating layer is formed at the inner peripheral surface of a hose inner layer after a hose is prepared without the use of a mandrel, and thus examined various types of lubricants. Accordingly, the present inventors found that fluorine-modified silicone lubricant sticks well to fluoro rubber and provides preferable results, thus attaining the present invention. Although the present inventors also attempted to add lubricant to the inner peripheral surface of a hose inner layer at the unvulcanized state, a hose was flattened or the like when lubricant was coated at the unvulcanized state, and production was not stable.

"Fuel transporting hoses having a fluoro rubber inner 'layer" also include fuel transporting hoses consisting only of a fluoro rubber inner layer in the present invention.

### BRIEF DESCRIPTION OF THE DRAWINGS

FIG. 1 is a partial cut-away view showing an embodiment of a fuel transporting hose obtained by the method for manufacturing a fuel transporting hose according to the present invention;
FIG. 2 is an explanatory view showing the steps of forming a lubricating layer at the inner peripheral surface of a fluoro rubber inner layer by a coating method using a spindle; and
FIG. 3 is an explanatory view showing the step of forming a lubricating layer at the inner peripheral surface of a fluoro rubber inner layer by a circulation method.

### DESCRIPTION OF THE PREFERRED EMBODIMENTS

Embodiments of the present invention will be explained in detail below.

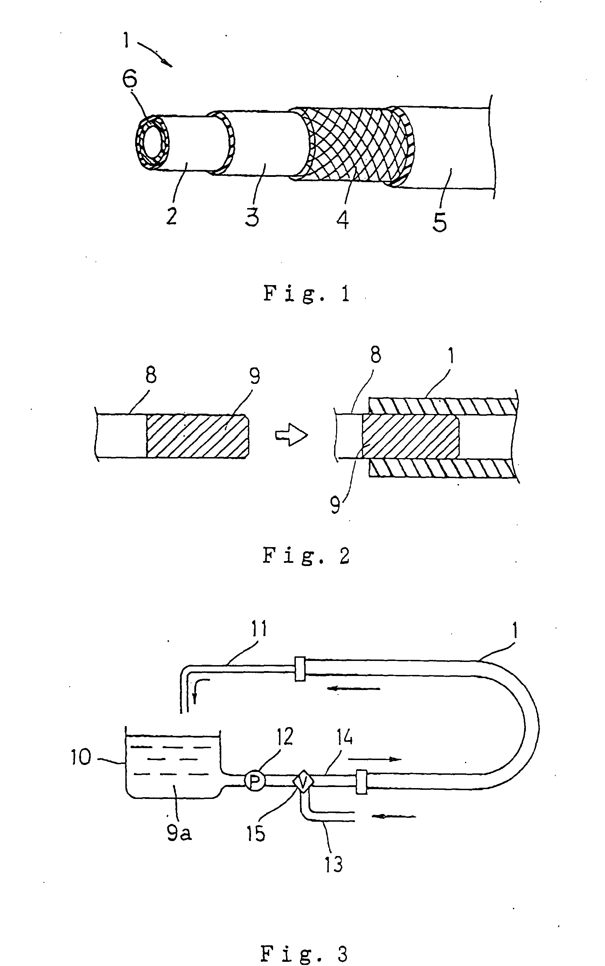

The method for manufacturing a fuel transporting hose of the present invention may be explained by reference to an embodiment of a fuel transporting hose as shown in FIG. 1. This fuel transporting hose 1 has a four-layered structure in which an intermediate layer 3, a reinforcing layer 4 and an outer layer 5 are sequentially laminated on the outer peripheral surface of a fluoro rubber inner layer 2. A fluorine-modified silicone lubricating layer 6 is formed on the inner peripheral surface of the fluoro rubber inner layer 2.

Fluoro rubber used as a material for the fluoro rubber inner layer 2 is not particularly limited. The fluoro rubber includes, for instance, vinylidene fluoride-hexafluoropropylene copolymer, vinylidene fluoride-hexafluoropropylene-tetrafluoroethylene terpolymer, tetrafluoroethylene-propylene copolymer, tetrafluoroethylene-perfluorovinyl ether copolymer, vinylidene fluoride-tetrafluoroethylene-perfluoromethylvinyl ether terpolymer, and the like. The above rubbers may be used alone or with two or more kinds thereof together. Among them, it is preferable to use vinylidene fluoride-hexafluoropropylene copolymer and vinylidene fluoride-hexafluoropropylene-tetrafluoroethylene terpolymer for their excellent balance between gasoline impermeability and costs.

Moreover, the fluoro rubber is normally used in conjunction with one or more of a vulcanizing agent, a vulcanization accelerator, a processing aid and the like. The vulcanizing agent may include, for instance, hexamethylenediamine carbamate, dicinnamylidene hexadiamine, bisamino cyclohexylmethane carbamate, bisphenol AF, di-t-butylperoxyalkane, and the like. The vulcanization accelerator may include, for example, metal oxides such as MgO, PbO and CaO, Ca(OH)₂ quaternary ammonium salt, quaternary phosphonium salt, triallyl isocyanurate, and the like. The processing aid may include, for example, a fatty acid salt and the like.

The fluoro rubber inner layer 2 is normally 0.1 to 1.5 mm, preferably, 0.2 to 1.0 mm, in thickness.

A lubricant containing fluorine-modified silicone as a main component is normally used to form the fluorine-modified silicone lubricating layer 6 (mentioned as "lubricating layer 6" hereinafter) formed on the inner peripheral surface of the fluoro rubber inner layer 2.

The fluorine-modified silicone has, for instance, structural units represented by the following Formula (1) or Formula (2). Among them, it is preferable to use the silicone having structural units represented by the following Formula (1) due to its excellent lubricating property and permeability to fluoro rubber. 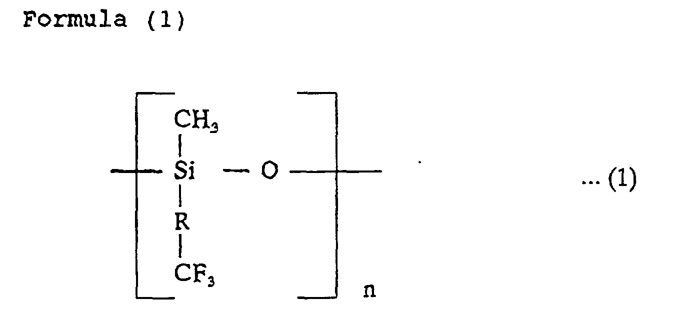 wherein R indicates 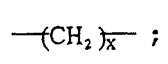 X is a positive number of 0 to 5; and n is a positive number of 8 to 26. 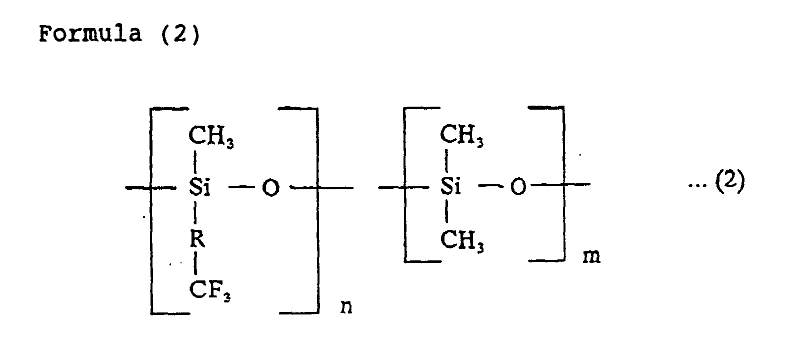 wherein R indicates

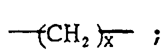

X is a positive number of 0 to 5; n is a positive number of 4 to 26; m is a positive number of 4 to 26; and repeating units n and m may be any polymer such as a random polymer and a block polymer.

The fluorine-modified silicone preferably has an average molecular weight of 1,200 to 4,000, more preferably, an average molecular weight of 1,200 to 2,500. Moreover, the fluorine-modified silicone preferably has a viscosity (at 25°C, which is the same hereinafter) of 50 to 1,000 mPa·S, more preferably, a viscosity of 50 to 300 mPa·S. Permeability to fluoro rubber or lubricating property may not be sufficient if the average molecular weight and viscosity are outside of the appropriate ranges of the average molecular weight and viscosity mentioned above, so that it is preferable to utilize the fluorine-modified silicone having an average molecular weight and a viscosity within the above specified ranges.

In addition to the fluorine-modified silicone, other components such as dimethyl silicone and polyether modified silicone may be mixed into the lubricant used for forming the lubricating layer 6. In this example, it is preferable to mix the fluorine-modified silicone at 60 wt.% or more, preferably, 80 wt.% or more, in relation to the lubricant as a whole. In other words, when the fluorine-modified silicone is mixed at less than 60 wt.%, the permeability of the lubricating layer 6 to the fluoro rubber becomes unsatisfactory, thereby gradually reducing the sealability at a hose joint.

The lubricating layer 6 should be formed on at least the inner peripheral surface of the fluoro rubber inner layer 2 at the ends of the fuel transporting hose 1. This is because the fuel transporting hose 1 is to be connected to a metal pipe at the ends thereof. However, a particular hose is often cut into appropriate lengths to provide two or more shorter hoses, so that it is preferable to form the lubricating layer 6 on the entire inner peripheral surface of the fluoro rubber inner layer 2 of the fuel transporting hose 1.

The intermediate layer 3, the reinforcing layer 4 and the outer layer 5, which are formed on the outer peripheral surface of the fluoro rubber inner layer 2, will be explained in the following.

The intermediate layer 3 is used to reinforce the fluoro rubber inner layer 2 which is formed in a thin layer so as to lower costs. The material of the intermediate layer is not particularly limited. Suitable materials include, for instance, nitrile butadiene rubber (NBR), hydrin rubber (ECO), chlorosulfonated polyethylene rubber (CSM), chloroprene rubber (CR), nitrile butadiene rubber-polyvinyl chloride rubber (NBR-PVC), and the like. The material may be used alone or with two or more types thereof. Among them, NBR and ECO are preferable due to their excellent gasoline impermeability. Additives such as a vulcanizing agent and/or a vulcanization accelerator are normally mixed into the intermediate layer material. The thickness of the intermediate layer 3 is generally 0.1 to 2 mm, preferably, 0.5 to 1.5 mm.

The reinforcing layer 4 adds pressure resistance to a hose, so that fuel or the like may be delivered through the hose at high pressure. The reinforcing layer 4 is made of natural threads such as hemp threads and cotton threads, synthetic threads such as polyester (PET) threads and vinylon threads, or metal threads such as wires. Among them, PET threads are preferable in consideration of a balance between strength and costs.

The outer layer 5 adds abrasion resistance and the like to a hose. The material thereof includes epichlorohydrin rubber (ECO, GECO), chlorosulfonated polyethylene rubber (CSM), nitrile butadiene rubber-polyvinyl chloride (NBR-PVC), and the like. The material may be used alone or with two or more kinds thereof. Additives such as a vulcanizing agent and/or a vulcanization accelerator are normally mixed into the outer layer material. The thickness of the outer layer 5 is generally 0.5 to 2 mm, preferably, 0.5 to 1.5 mm.

The method of manufacturing a fuel transporting hose of the present invention is not particularly limited as long as the lubricating layer 6 can be formed on the inner peripheral surface of the fluoro rubber inner layer 2. However, the methods are roughly divided into two types, coating method and circulation method, depending generally on the particular manner of forming the lubricating layer 6 on the inner peripheral surface of the fluoro rubber inner layer 2.

The coating method is first explained. In this method, the lubricating layer 6 is formed by applying lubricant having fluorine-modified silicone as a main component after the fuel transporting hose 1 having the fluoro rubber inner layer 2 is prepared.

Specifically, unvulcanized fluoro rubber and an intermediate layer material are first co-extruded without the use of a mandrel, thus forming the fluoro rubber inner layer 2 and the intermediate layer 3. PET threads or the like are then braided on the outer peripheral surface of the intermediate layer 3 to form the reinforcing layer 4. Therefore, an outer layer material is extruded on the outer peripheral surface of the reinforcing layer 4 to mold the outer layer 5. The product is wound on a plate and is vulcanized under predetermined conditions (for instance, at about 150 to 170°C for about 20 to 120 minutes). Accordingly, the fuel transporting hose 1 consisting of the fluoro rubber inner layer 2, the intermediate layer 3, the reinforcing layer 4 and the outer layer 5, is provided.

Subsequently, the lubricating layer 6 is formed by a coating method on the inner peripheral surface of the fluoro rubber inner layer 2 of the fuel transporting hose 1. The method is carried out as follows. Lubricant including fluorine-modified silicone as a main component is first prepared. Then, as shown in FIG. 2, a spindle 8 having roughly the same outer diameter as the inner diameter of the fuel transporting hose 1, is provided. Lubricant 9 is applied on an end of the outer peripheral surface of the spindle 8. The spindle 8 is inserted into an end of the fuel transporting hose 1 to a fixed distance and then is withdrawn, thereby forming the lubricating layer 6 on the inner peripheral surface of the fluoro rubber inner layer 2 of the fuel transporting hose 1. The range of application of the lubricant onto the inner peripheral surface of the fluoro rubber inner layer 2 of the fuel transporting hose 1 may be varied by the range of application of the lubricant onto the outer peripheral surface of the spindle 8, the distance of the spindle 8 inserted into the fuel transporting hose 1, and the like.

The coating method mentioned above is not limited to the method with the use of the spindle 8 shown in FIG. 2. For instance, the lubricating layer 6 may be formed by coating the lubricant onto the inner peripheral surface of the fluoro rubber inner layer 2 from at least one of the ends of the fuel transporting hose 1 with a tool such as a brush.

Therefore, according to the method, the lubricating layer 6 can be selectively formed onto at least one end of the fuel transporting hose 1, so that the method is preferable for hoses which are directly connected to a metal pipe, like short hoses of less than 10 m in length.

The circulation method now will be described.

As described above, the fluoro rubber inner layer 2 and the intermediate layer 3 are first molded without the use of a mandrel. Then, the reinforcing layer 4 and the outer layer 5 are formed. The product is wound on a plate and is vulcanized under predetermined conditions (for instance, at about 150 to 170°C for about 20 to 120 minutes). Accordingly, the fuel transporting hose 1 consisting of the fluoro rubber inner layer 2, the intermediate layer 3, the reinforcing layer 4 and the outer layer 5, is provided.

Then, an apparatus shown in FIG. 3 is provided. As shown in the figure, the apparatus includes an outlet pipe 14 stretching from a lower part of a container 10 where lubricant solution 9a is kept. An end of the outlet pipe 14 is inserted into one end of the fuel transporting hose 1. A liquid feeding pump 12 is also provided between the container 10 and the outlet pipe 14. A passage switching valve 15 is also provided in the middle of the outlet pipe 14. An air pipe 13 is linked to the outlet pipe 14 through the passage switching valve 15. One end of a circulation pipe 11 is inserted and connected to the other end of the fuel transporting hose 1. The opposite end of the circulation pipe 11 stretches towards the container 10, and terminates above the liquid surface of the lubricant solution 9a in the container 10.

The apparatus circulates the lubricant solution 9a through the fuel transporting hose 1 and volatilizes solvent as described below. First, the air pipe 13 is closed by the passage switching valve 15, and the container 10 and the fuel transporting hose 1 are linked together through the outlet pipe 14. As the liquid feeding pump 12 is activated in this state, the lubricant solution 9a inside the container 10 is caused to pass through the outlet pipe 14 and is delivered to one end of the fuel transporting hose 1. The solution passes through the fuel transporting hose 1, and exits from the other end of the fuel transporting hose 1. The lubricant solution 9a then passes through the circulation pipe 11 connected to the other end of the fuel transporting hose 1, and is returned to the container 10. The lubricant solution 9a circulates inside the fuel transporting hose 1 in this way. The circulation time is appropriately determined by the concentration of the lubricant solution 9a, the length of the fuel transporting hose I, and the like. However, it is typically 0.5 to 5 minutes, preferably, 0.5 to 1 minute.

After the circulation of the lubricant solution 9a, solvent is volatilized from the solution. In particular, the liquid feeding pump 12 is stopped, and at the same time, the passage switching valve 15 closes the container 10 and opens the air pipe 13. Air is blown through the air pipe 13 by an air blower (not shown) such as a fan. Then, some of the lubricant solution 9a remaining in the fuel transporting hose 1 is forced by air pressure at the beginning of the air blow to flow through the hose 1, and is returned to the container 10 from the circulation pipe 11. Only the lubricant solution 9a adhering on the inner wall of the hose (inner peripheral surface of the fluoro rubber inner layer 2) remains in the hose. As air is continuously blown, solvent volatilizes from the lubricant solution 9a adhering on the inner wall of the fuel transporting hose 1 (inner peripheral surface of the fluoro rubber inner layer 2). Then, the lubricant having fluorine-modified silicone as a main component deposits, and the lubricating layer 6 is formed from the remaining lubricant. The air blowing conditions depend on the concentration of the lubricant solution 9a and the length of the fuel transporting hose 1. However, air blowing pressure (MPa) × air blowing time (minutes) are typically about 0.1 to 1.0 MPa × 1 to 10 minutes, preferably, about 0.3 to 0.4 MPa × 1 to 5 minutes.

For the lubricant solution 9a, for example, only the fluorine-modified silicone is dissolved in a solvent, fluorine-modified silicone and another component are dissolved in solvent, and the like. The solvent may include, for instance, a ketone-based solvent, an ester-based solvent, and the like. The concentration of the fluorine-modified silicone based lubricant solution depends on the viscosity of the fluorine-modified silicone. However, when the viscosity of the fluorine-modified silicone is 50 to 300 mPa·S, the concentration is normally 1 to 30 wt.%, preferably, 5 to 20 wt.%.

Accordingly, the circulation method can form the lubricating layer 6 over the entire surface of the fluoro rubber inner layer 2, and preferably is used to form the lubricating layer 6 for a long hose of 10 m or longer. In other words, since a long hose is generally cut to an appropriate length for use, the lubricating layer 6 has to be provided to the entire inner surface of the hose.

The present invention is not limited to the method for manufacturing a four-layered fuel transporting hose as shown in FIG. 1. The fuel transporting hose may be three-layered or five-layered as long as the hose has a fluoro rubber inner layer.

The fuel transporting hose obtained by the method of the present invention is connected to, for instance, a metal pipe or the like for use. At the joint of the hose, the lubricating layer on the fluoro rubber inner layer is at an interface between the fuel transporting hose and the metal pipe, and tends to diminish due to the passage of a certain period of time after the connection or due to the influence of heat. This is because the lubricating layer contains fluorine-modified silicone as a main component, and the fluorine-modified silicone is compatible with the fluoro rubber and gradually permeates into the fluoro rubber inner layer. The permeation is accelerated by exposure to heat. In other words, when a fuel transporting hose and a metal pipe are to be joined together, the end of the metal pipe can be smoothly inserted into the end of the fuel transporting hose because of the lubricating layer. Moreover, the lubricating layer permeates into the fluoro rubber inner layer of the fuel transporting hose after the connection and diminishes from the interface between the pipe and the inner layer. However, hydrogen bonds are sufficiently generated at the interface between the inner peripheral surface of the fluoro rubber inner layer and the outer peripheral surface of the metal pipe, thus the fluoro rubber inner layer and the metal pipe are firmly mounted together. Therefore, even if the fuel transporting hose gradually deteriorates and fastening force decreases due to the deterioration of elasticity thereof, the fluoro rubber inner layer and the metal pipe stick to each other due to the hydrogen bonds therebetween, and sealability is maintained for a long period.

When the present invention is applied to fuel pipes contained in, for example, a vehicle engine compartment or the like, the lubricating layer 6 containing fluorine-modified silicone as a main component is automatically exposed to heat from an engine or the like. The lubricating layer 6 permeates into the fluoro rubber inner layer 2 and then diminishes. In the present invention, heat treatments may be deliberately conducted one by one after the fuel transporting hose and the metal pipe are joined to each other. The conditions of such a heat treatment are normally about 100 to 150°C × 15 to 120 minutes, preferably, about 100 to 135°C × 30 to 120 minutes. Sealability, in addition to fastening force due to hose elasticity, is made excellent after the connection of the hose by the heat treatment due to hydrogen bonds being formed between the fluoro rubber inner layer and the metal pipe.

Examples will be explained along with comparative examples in the following.

### Example 1

### Preparation of Inner Layer Material

100 wt. parts (mentioned as "parts" hereinafter) of vinylidene fluoride-hexafluoropropylene-tetrafluoroethylene terpolymer (FLUOREL FE5731Q manufactured by sumitomo 3M Ltd. of Tokyo [Dyneon]), 3 parts of MgO, 6 parts of Ca(OH)₂, and 15 parts of carbon black were mixed and kneaded by a mixer, thus preparing an inner layer material.

### Preparation of Hose

The inner layer material and an intermediate layer material (NBR treated so as to have bonding property to the inner layer material) were co-extruded without the use of a mandrel, thus forming an inner layer and an intermediate layer. After PET threads were braided to form a reinforcing layer at the outer peripheral surface of the intermediate layer, an outer layer material (GECO) was extruded to form an outer layer at the outer peripheral surface of the reinforcing layer. The product was wound onto a plate and was vulcanized at about 160°C for about 45 minutes, thus preparing a long hose (10 m in length) consisting of the inner layer, the intermediate layer, the reinforcing layer and the outer layer.

FS1265 manufactured by Toray Dow Corning silicone Co., Ltd. of Tokyo, Japan (viscosity: 300 mPa·S) was used as fluorine-modified silicone, this material having the structural units represented by the Formula (1) mentioned above (where X=2 in the formula). The fluorine-modified silicone was dissolved in ester acetate/ligroin mixed solvent (weight ratio: 1/1) to prepare lubricant solution of 10 wt.% concentration. After the lubricant solution was circulated for 30 seconds in the hose by the device shown in FIG. 3 in the method mentioned above, air was blown at about 0.4 MPa to remove lubricant solution inside the hose. Air was continuously blown for five minutes at the pressure mentioned above to volatilize the solvent in the remaining lubricant solution to form a lubricating layer, and the hose was then cut at an appropriate length (300 mm) to form a final product. The hose had a 5.8 mm inner diameter and a 3.2 mm thickness (0.5 mm thick inner layer, 1.5 mm thick intermediate layer, 0.2 mm thick reinforcing layer and 1 mm thick outer layer).

### Example 2

A hose was prepared as in Example 1, except that the lubricating layer was formed by a coating method instead of a circulation method. In particular, the inner layer material and the intermediate layer material were co-extruded without the use of a mandrel, thus forming an inner layer and an intermediate layer. After PET threads were braided to form a reinforcing layer on the outer peripheral surface of the intermediate layer, the outer layer material was extruded to form an outer layer on the outer peripheral surface of the reinforcing layer. The product was wound onto a plate and was vulcanized at about 160°C for about 45 minutes, thus preparing a long hose (10 m in length) consisting of the inner layer, the intermediate layer, the reinforcing layer and the outer layer. Then, the hose was cut into appropriate lengths (300 mm).

Lubricant containing the same fluorine-modified silicone as in Example 1 was prepared. The lubricant was coated on both ends of the cut hose by a brush at 2 mg/cm², thereby forming a lubricating layer and preparing a hose as a final product.

### Comparative Example 1

A hose was prepared as in Example 1, except that a mandrel was used for preparing the hose and a lubricating layer was not formed at the inner peripheral surface of an inner layer of the hose. In particular, a resinous mandrel having been coated with a release agent (Silicone TSF456-100 manufactured by Toshiba Silicone Co., Ltd. of Tokyo, Japan) on its surface, was prepared. The inner layer material and the intermediate layer material mentioned above were co-extruded, thus forming an inner layer and an intermediate layer. After PET threads were braided to form a reinforcing layer at the outer peripheral surface of the intermediate layer, the outer layer material was extruded to form an outer layer. Moreover, resin (coating material) was coated on the surface of the outer layer, and the product was wound around a drum and then was vulcanized at about 160°C for about 45 minutes. Subsequently, the resin (coating material) was cut and removed, and the mandrel was pulled out by water pressure. Thus, a long hose (10 m in length) consisting of the inner layer, the intermediate layer, the reinforcing layer and the outer layer was realized. Then, the hose was cut into appropriate lengths (300 mm).

### Comparative Example 2

A hose was prepared as in Example 1, except that the lubricating layer was not formed at the inner peripheral surface of the inner layer of the hose.

### Comparative Example 3

A lubricating layer was formed at the inner peripheral surface of an inner layer of a hose as in Example 1, except that a dimethyl silicone lubricant solution was used instead of the fluorine-modified silicone lubricant solution. In particular, dimethyl silicone (TSF456 manufactured by Toshiba Silicone Co., Ltd. of Tokyo, Japan; viscosity: 100 mPa·S) was first prepared, and was then dissolved in ester acetate/ligroin mixed solvent (weight ratio: 1/1) to prepare a lubricant solution of 10 wt.% concentration. The lubricating layer was formed by the circulation method as in Example 1 by using this lubricant solution.

Each characteristic of the hoses in the Examples and the Comparative Examples was evaluated in accordance with the following standards. The results thereof are shown in Table 1.

### Manufacturing Costs

Manufacturing costs are indicated as ⓞ, ○, Δ, × in the order of lower costs.

### Insertability

The hoses were vertically inserted 25 mm into a single bead pipe having 6 mm of diameter at a speed of 30 mm/minute, and then the maximum load was measured. When the maximum load of the hoses is 98N or lower, the insertability thereof is superior.

### Sealability

After the hoses were inserted into a pipe, a plate clamp having 8 mm of diameter was mounted at a location after a bulge. Pressure was raised for 30 seconds by nitrogen gas at 0.05 MPa/minute, and the sealability of the hoses was evaluated on the basis of whether or not there was leakage of nitrogen gas. The sealability after a heat aging test (120°C × 288 hours) was also evaluated. The sealability is considered superior when there is no leak at 0.2 MPa or higher.

### Pull-out Resistance

After the hoses were inserted into a pipe, a plate clamp having 8 mm of diameter was mounted at a location after a bulge. The hoses were vertically pulled out at the speed of 30 mm/minute, and then the maximum load was measured. The maximum load after a heat aging test (120°C × 288 hours) was also measured. when the maximum load is 120N or higher, the pull-out resistance is considered superior.

**Table 1**

| | | Examples | | Comparative Examples | | |
|---|---|---|---|---|---|---|
| | | 1 | 2 | 1 | 2 | 3 |
| Manufacturing Costs | | ○ | Δ | × | ⓞ | ○ |
| Insertability (N) | | 70 | 65 | 72 | 134 | 62 |
| | | (○) | (○) | (○) | (×) | (○) |
| Sealability (MPa) | Initial | ○ | ○ | ○ | ○ | ○ |
| | After heat aging | ○ | ○ | ○ | ○ | ○ |
| Pull-out Resistance (N) | Initial | 177 | 156 | 306 | 267 | 92 |
| | | (○) | (○) | (○) | (○) | (×) |
| | After heat aging | 252 | 261 | 411 | 359 | 95 |
| | | (○) | (○) | (○) | (○) | (×) |

According to the results in the table shown above, Examples were manufactured at low costs and are superior in all characteristics, including insertability, sealability and pull-out resistance.

On the contrary, Comparative Example 1 was manufactured in the conventional method with the use of a mandrel, so that the manufacturing cost was the highest. It is demonstrated that Comparative Example 2 has far inferior insertability since a lubricant was not used. Comparative Example 3 has far inferior pull-out resistance since a lubricant solution containing dimethyl silicone as a main component was used.

As described above, the present invention manufactures a fuel transporting hose without the use of a mandrel, so that it becomes unnecessary to pull out a mandrel by water pressure. It also becomes unnecessary to consider pressure resistance to pull out a mandrel by water pressure. Therefore, the method of the present invention can significantly reduce manufacturing costs, equipment costs and material costs, in comparison with conventional methods which use a mandrel. Additionally, in the method of the present invention, a fluorine-modified silicone lubricating layer is formed on the inner peripheral surface of the fluoro rubber inner layer. Thus, the present invention is superior in all characteristics, including insertability, sealability and pull-out resistance.

A lubricating layer may be formed by circulating fluorine-modified silicone lubricant solution inside the fuel transporting hose having the fluoro rubber inner layer, and then volatilizing solvent from the fluorine-modified silicone lubricant solution. Thus, the lubricating layer may be formed over the entire inner peripheral surface of the fluoro rubber inner layer, which is preferable in forming a lubricating layer for a long hose.

A lubricating layer may be formed by coating a fluorine-modified silicone lubricant on the inner peripheral surface of the fluoro rubber inner layer from at least one of the ends of a fuel transporting hose. Thus, a lubricating layer may be selectively formed at the end of the fuel transporting hose. In this case, a lubricating layer may be formed over the entire inner peripheral surface of a cut hose by coating a fluorine-modified silicone lubricant on the inner peripheral surface of the fluoro rubber inner layer, after cutting the hose having the fluoro rubber inner layer to a desirable length. Thus, this manner is preferable in manufacturing a hose, like a short hose, which is connected to a metal pipe.

The features disclosed in the foregoing description, in the claims and/or in the accompanying drawings may, both separately and in any combination thereof, be material for realising the invention in diverse forms thereof.

## Claims

1. A method for manufacturing a fuel transporting hose comprising the steps of:
extrusion-molding an unvulcanized hose having fluoro rubber as an inner layer without using a mandrel;
vulcanizing the unvulcanized hose to form a fuel transporting hose having a fluoro rubber inner layer; and
forming a fluorine-modified silicone lubricating layer on an inner peripheral surface of the fluoro rubber inner layer.

2. The method according to Claim 1, wherein the fluorine-modified silicone lubricating layer is formed on the inner peripheral surface of the fluoro rubber inner layer by circulating fluorine-modified silicone lubricant solution inside the fuel transporting hose having the fluoro rubber inner layer, and then volatilizing solvent from the fluorine-modified silicone lubricant solution.

3. The method according to Claim 1, wherein the fluorine-modified silicone lubricating layer is formed on the inner peripheral surface of the fluoro rubber inner layer by coating fluorine-modified silicone lubricant on the inner peripheral surface of the fluoro rubber inner layer, from at least one end of the fuel transporting hose.

4. The method according to Claim 3, wherein the fluorine-modified silicone lubricant is coated on the inner peripheral surface of the fluoro rubber inner layer from at least one of end of the fuel transporting hose after the fuel transporting hose having the fluoro rubber inner layer is cut to a shorter length.
